# EUROPÄISCHE PATENTANMELDUNG

(11) **EP 1 031 874 A1**
(43) Veröffentlichungstag der Anmeldung: **30.08.2000**
(21) Anmeldenummer: 00101470.3
(22) Anmeldetag: 26.01.2000
(51) Int. Cl.: G03B 27/72

(54) **Vorrichtung und Verfahren zum Belichten eines digitalen Bildes auf lichtempfindliches Material**

(30) Priorität: 05.02.1999 DE 19904750
(71) Anmelder: Agfa-Gevaert AG, 51373 Leverkusen (DE)
(72) Erfinder: Damm, Tobias, Dr., 81545 München (DE); Jacob, Friedrich, 81247 München (DE); Lorenz, Bernhard, 85417 Marzling (DE); Oberhardt, Knut, 83607 Föching (DE); Prause, Lothar, 82069 Schäftlarn (DE); Taresch, Gudrun, Dr., 80337 München (DE)

(57) **Zusammenfassung**

Die Erfindung beschreibt eine Vorrichtung zum Belichten eines digitalen Bildes auf lichtempfindliches Material. Die Vorrichtung weist eine Bilderzeugungseinrichtung auf, die von einer Steuereinrichtung entsprechend der Bilddaten angesteuert wird. Ferner umfasst sie ein optisches System zum Abbilden des Bildes auf das lichtempfindliche Material, das von einer Bühne gehalten wird. Im Belichtungsstrahlengang ist ein Strahlteiler angeordnet, der einen Teil des von der Bilderzeugungseinrichtung abgestrahlten Lichts auf einen Sensor leitet, wobei der Sensor mindestens eine Zeile aufweist.

## Beschreibung

Die Erfindung betrifft eine Vorrichtung sowie ein Verfahren zum Belichten eines digitalen Bildes auf lichtempfindliches Material nach dem Oberbegriff von Anspruch 1 und Anspruch 13. Derartige Vorrichtungen sind aus verschiedenen Anmeldungen, die sich mit digitalen Belichtungseinrichtungen befassen, bekannt.

In der DE-PS 42 11 128 C2 wird ein Bildübertragungsverfahren beschrieben, bei dem eine Bildvorlage punkt- und zeilenweise abgetastet, die erzeugten Signale digitalisiert und die digitalen Bildsignale mittels eines von einer Lichtquelle beleuchteten Lichtmodulators über eine Optik auf Fotopapier aufbelichtet werden. Bei dem Modulator, der entsprechend der Bildinformation angesteuert wird, kann es sich um eine Lichtventilröhre, eine Flüssigkristallanzeige oder eine Anordnung, die Ferrokristalle beinhaltet, handeln.

In der US 5,796,508 wird ebenfalls ein digitales Bild mit einem Lichtmodulator auf Fotopapier belichtet. Hier wird als Lichtmodulator ein DMD (Digital Micromirror Device) verwendet. In dieser Schrift wird darauf hingewiesen, daß es notwendig ist, die Funktionstüchtigkeit jedes einzelnen Pixels des Lichtmodulators - hier jedes einzelnen Spiegels - zu überwachen, um eine wirklich hervorragende Bildqualität auf dem Fotopapier zu erhalten. Es wird vorgeschlagen, zu diesem Zweck das von jedem Spiegel reflektierte Licht in der Abschaltphase - also wenn die Spiegel das Licht vom Fotopapier wegreflektieren - zu messen. Das gemessene Licht wird mit einem Sollwert verglichen. Dieser entspricht der Lichtmenge, die die Spiegel bei optimalen Bedingungen reflektieren sollen. Falls eine Abweichung zwischen ist- und Sollwert auftritt, wird bei der Ansteuerung des Lichtmodulators der Differenzwert berücksichtigt.

Ein derartiges Belichtungskorrekturverfahren ist allerdings nur für reflektierende Lichtmodulatoren wie DMDs praktikabel, da hier die Kontrollmessung den Belichtungsstrahlengang nicht stört. Für transmissive Lichtmodulatoren oder zur Kontrolle des gesamten Systems - also des Lichtmodulators einschließlich der abbildenden Optik - ist dieses Verfahren nicht geeignet.

Aufgabe der Erfindung war es deshalb, ein Verfahren zum Belichten eines digitalen Bildes auf lichtempfindliches Material zu entwickeln, das eine gleichmäßige Ausleuchtung des zu belichtenden Mediums und damit optimale Bildqualität gewährleistet und für beliebige digitale Belichtungseinheiten geeignet ist.

Gelöst wird diese Aufgabe gemäß der Erfindung durch eine Vorrichtung und ein Verfahren zum Belichten eines digitalen Bildes auf lichtempfindliches Material mit den Merkmalen von Anspruch 1 und Anspruch 13.

Erfindungsgemäß wird beim Belichten eines digitalen Bildes auf lichtempfindliches Material ein Teil des Lichts zwischen der Bilderzeugungseinrichtung und dem lichtempfindlichen Material aus dem Belichtungsstrahlengang ausgekoppelt und auf einen Sensor geleitet. Bei dem Sensor kann es sich um einen Zeilen- oder Flächensensor handeln, er muß auf jeden Fall mit mehreren Pixeln gleichzeitig Information aufnehmen können. Der Sensor kann ein Fotodiodenarray oder ein CCD oder jede andere Lichtintensitätsmeßeinrichtung sein. Bei der erfindungsgemäßen Anordnung mißt der Sensor als Istwert die Lichtmenge, die von der durch die Steuereinrichtung angesteuerten Bilderzeugungseinrichtung auf das lichtempfindliche Material gelenkt wird. Dieser Istwert hängt von den Ansteuerwerten, vom aktuellen Zustand der Bilderzeugungseinrichtung und gegebenenfalls von der Abbildungsoptik ab, falls die Lichtauskopplung nach Durchlaufen der Optik erfolgt.

Um den Istwert unabhängig von den Bilddaten zu machen, ist es auch möglich, das lichtempfindliche Material mit einem Verschluß abzudecken, den Lichtmodulator zu beleuchten sowie das Licht unmoduliert weiterzuleiten und auszukoppeln. Vorteilhaft ist, daß in diesem Fall der Istwert nicht von den Bilddaten abhängt, nachteilig, daß die Korrektur nicht während der Belichtung erfolgen kann, sondern eine extra Kalibrierphase benötigt wird.

Der Istwert wird mit dem Sollwert verglichen, welcher theoretisch zum Belichten des lichtempfindlichen Materials notwendig ist, um die Bilddaten optimal auf das lichtempfindliche Material zu übertragen.

Falls der Ist-Wert vom Soll-Wert abweicht, wird die Differenz bei der Ansteuerung der Bilderzeugungseinrichtung berücksichtigt. Durch Vergleichen der Sollwerte des zu übertragenden digitalen Bildes mit den real am Sensor ankommenden Lichtwerten kann kontrolliert werden, ob die Bilderzeugungseinrichtung die Bilddaten optimal in Lichtsignale umsetzt oder ob es zu Abweichungen vom idealen Bildübertragungswert kommt. Hierfür können diverse Fehlerquellen verantwortlich sein. Ursachen für Abweichungen von Ist- und Sollwert können eine ungleichmäßige Ausleuchtung der Bilderzeugungseinrichtung, aber auch fehlerhafte oder veränderliche Pixel der Bilderzeugungseinrichtung oder eine ungleichmäßige Lichtleitung durch die Optik im Belichtungsstrahlengang sein. Diese Fehler werden korrigiert, indem die Abweichungen bei der Ansteuerung der Bilderzeugungseinrichtung berücksichtigt werden. Sensor und Steuereinrichtung bilden somit einen Regelkreis, der die real übertragene Lichtmenge an die dem Bildwert entsprechende angleicht und somit eine optimale Bildwiedergabe gewährleistet.

Falls jedes einzelne Pixel der Bilderzeugungseinrichtung korrigierbar sein soll, muß der Sensor das ausgekoppelte Licht mit einer Auflösung erfassen, die mindestens der der Bilderzeugungseinrichtung entspricht. In diesem Fall können Schwankungen oder Fehler, die einzelne Pixel der Bilderzeugungseinrichtung selbst betreffen, optimal ausgebessert werden - unabhängig davon, ob der Lichtmodulator reflektiv oder transmissiv ist. Auch Ungleichmäßigkeiten in der Ausleuchtung der Bilderzeugungseinrichtung durch die Beleuchtungseinrichtung können auf diese Weise einfach korrigiert werden. Falls die Auflösung des Sensors geringer ist als die der Beleuchtungseinrichtung, können nur großflächige Schwankungen bei der Bilderzeugung, wie beispielsweise ein Randabfall der Lichtquelle, berücksichtigt werden.

Eine sehr kostengünstige und dennoch hochauflösende Bilderzeugungseinrichtung, für die diese Erfindung besonders vorteilhaft einsetzbar ist, ist ein aus mehreren Segmenten zusammengesetzter Druckkopf. Ein derartiger Druckkopf wird beispielsweise in der US 5,767,874 beschrieben. In dieser Schrift werden mehrere kleine DMD-Segmente nebeneinander gesetzt. Um einen fließenden Übergang vom Bild eines Segmentes zum nächsten zu gewährleisten, wird vorgeschlagen, die Bilder der Segmente etwas überlappen zu lassen und im Überlappungsbereich die von den Segmenten übertragene Lichtintensität mit Funktionen zu modulieren, die die Intensität des einen Bildes auf Null abfallen lassen, während die des anderen Bildes auf den Maximalwert ansteigt, so daß von beiden Segmenten zusammen im Überlappungsbereich immer ein konstanter Wert übertragen wird.

Beim Überlappen der Bilder der Segmente geht jedoch von der Auflösungskapazität der DMDs viel verloren. Dies kann vermieden werden, indem die Bilder der Segmente einer Bilderzeugungseinrichtung ohne Überlappen nebeneinander gesetzt werden und der Übergang von einem Teilbild zum nächsten mittels der beschriebenen Erfindung angepaßt wird. Zum Aneinandersetzen der Teilbilder können alle Verfahren verwendet werden, die in der US 5,801,814 beschrieben sind. Hier wird ebenfalls ein Bild in Teilbilder aufgespalten, und die Teilbilder werden neben- und nacheinander auf Fotopapier aufbelichtet. In dieser Schrift wird der Überlappungsbereich der Teilbilder dadurch korrigiert, daß vor der Belichtung des Fotopapiers die Mehrfachintensität im Überlappungsbereich gemessen und die Betichtungsdaten dann entsprechend dieser Messung angepaßt werden. Dadurch, daß vor der eigentlichen Belichtung die Daten zur Korrektur aufgenommen werden müssen, geht jedoch bei diesem Kopierprozeß viel Zeit verloren, was bei der vorliegenden Erfindung, die die Korrektur während der Belichtung vornimmt, vermieden werden kann. Bei dem erfindungsgemäßen Aufbau ist kein Überlappungsbereich notwendig, die Belichtungskorrektur kann während der Belichtung erfolgen, und es können alle bekannten Lichtmodulatoren - DMD, DRI ( 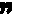 Digital Reflective Imaging", reflexive LCDs, siehe US 5,826,959) GLV ( 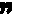 Grating Light Valve" siehe WO 98/41893) LCD, PLZT, CRT, LED etc. - verwendet werden. Geeignet sind hier insbesondere alle Lichtmodulatoren, die hochauflösend sind und in der digitalen Projektionstechnik eingesetzt werden können.

Immer wenn das digitale Bild in verschiedene Teilbilder aufgeteilt wird und diese Teilbilder auf dem lichtempfindlichen Material wieder zu einem Gesamtbild zusammengesetzt werden, müssen die Stoßbereiche der Teilbilder aufeinander abgestimmt werden. Diese Anpassung ist notwendig, unabhängig davon, wie das Erzeugen und Aneinandersetzen der Teilbilder erfolgt. Die Teilbilder können auf mehreren Lichtmodulatoren gleichzeitig erzeugt und nebeneinander abgebildet oder auf einem Lichtmodulator nacheinander erzeugt werden. Im zweiten Fall werden die Teilbilder nacheinander auf das lichtempfindliche Material übertragen, indem zwischen dem Aufbelichten der Teilbilder das lichtempfindliche Material oder die Bilderzeugungseinrichtung bewegt werden oder der Abbildungsstrahlengang verändert wird.

Erfindungsgemäß wird immer wenigstens das von der Bilderzeugungseinrichtung abgestrahlte Licht, das den Stoßbereich sowie ein definiertes Gebiet um denselben herum auf das lichtempfindliche Material abbildet, durch einen Strahlteiler aufgespalten und ein Anteil dieses Lichts auf einen Sensor geleitet. Der Sensor muß zur Korrektur des Stoßbereichs zweier Teilbilder mindestens zwei Zeilen aufweisen, so daß je eine Zeile je einem Teilbild zugeordnet werden kann. Die an den beiden Zeilen gemessenen Belichtungswerte werden miteinander verglichen, und die Ansteuerung wird verändert, bis die Werte unter Berücksichtigung eventueller Bilddaten übereinstimmen.

Es ist natürlich auch möglich, das Licht des vollständigen Bildes aufzuspalten und aufzunehmen. Hierfür wird jedoch ein recht großer Sensor benötigt.

Der Strahlteiler, der den zur Belichtungskorrektur verwendeten Lichtanteil auskoppelt, kann vor oder nach dem Objektiv angeordnet sein.

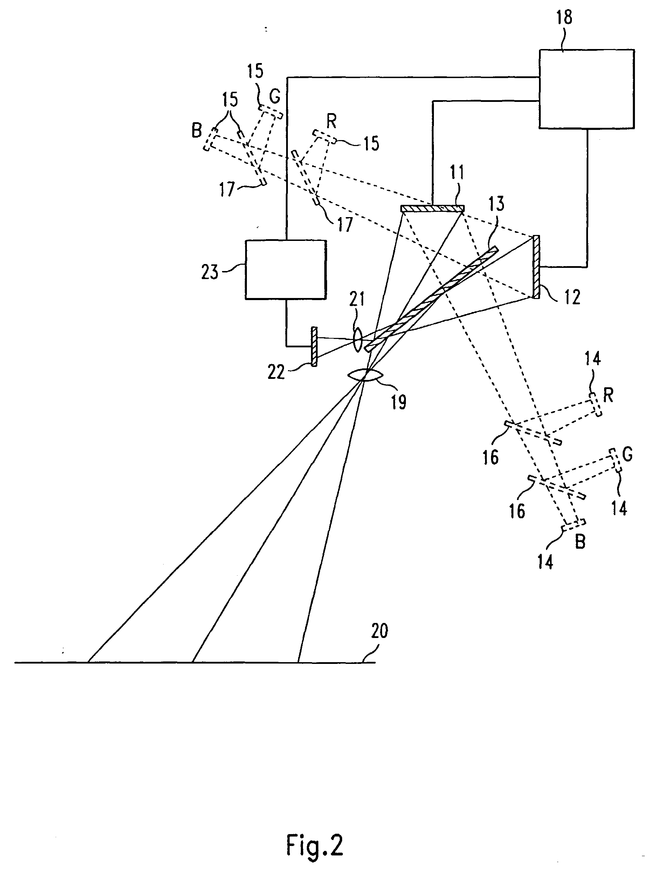

Falls die Teilbilder mittels eines Strahlteilers zu einem Gesamtbild vereinigt werden, wie dies im Ausführungsbeispiel in Figur 2 gezeigt ist, kann auch das an diesem Strahlteiler ohnehin an der vom Objektiv abgewandten Seite entstehende zweite Bild genutzt werden, um die Stoßbereiche der Teilbilder in der Beleuchtungsstärke anzugleichen.

An dem Sensor, bei dem es sich beispielsweise um ein CCD handeln kann, wird das an jedem Pixel aufgenommene Licht mit dem entsprechend der Bilddaten für dieses Pixel zu übertragenden Sollwert des Lichts verglichen. Bei einer Abweichung der Werte wird die Ansteuerung des entsprechenden Pixels der Bilderzeugungseinrichtung verändert, bis Ist- und Sollwert übereinstimmen.

Falls ein Sensor niedrigerer Auflösung verwendet wird, also ein Sensor mit einer Anzahl von Pixeln, die kleiner ist als die Anzahl der auf dem Sensor abgebildeten Pixel der Bilderzeugungseinrichtung, ist eine 1:1-Zuordnung der Pixel der Bilderzeugungseinrichtung und des Sensors nicht mehr möglich. In diesem Fall muß immer eine konkrete Anzahl von Pixeln der Bilderzeugungseinrichtung einem Pixel des Sensors zugeordnet werden. Die Summe der Sollwerte der Pixel der Belichtungseinrichtung muß dann mit dem Istwert, der an dem einen Pixel des Sensors gemessen wird, verglichen werden. Anschließend müssen die pro Pixel des Sensors auftretenden Abweichungen unter benachbarten Pixeln verglichen werden, um so Aussagen über eine ungleichmäßige Belichtungsstruktur machen zu können.

Weitere Einzelheiten und Vorteile der Erfindung ergeben sich aus den Unteransprüchen im Zusammenhang mit der Beschreibung eines Ausführungsbeispiels, das anhand der Zeichnungen eingehend erläutert wird.

Es zeigen:
- Fig. 1: in schematischer Darstellung eine Belichtungsvorrichtung, bei der gemäß der Erfindung ein Teil des Lichts auf einen Sensor ausgespiegelt wird,
- Fig. 2: in schematischer Darstellung eine Belichtungsvorrichtung, bei der Teilbilder zweier Lichtmodulatoren zu einem Bild zusammengefügt werden und
- Fig. 3: eine schematische Darstellung des Dichtebildes, das sich vom Stoßbereich der Teilbilder auf dem Sensor zeigt.

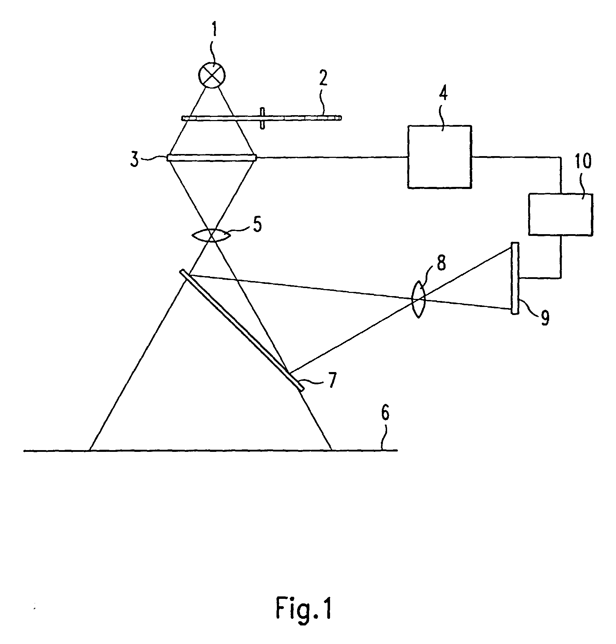

Figur 1 zeigt eine Lampe 1, welche durch den Filter eines Filterrades 2 ein LCD 3 beleuchtet. Das LCD 3 wird entsprechend vorgegebener digitaler Bilddaten von der Steuereinrichtung 4 angesteuert, so daß das Licht, das durch das LCD tritt, pixelweise moduliert ist. Dieses modulierte Licht wird durch ein Objektiv 5 auf Fotopapier 6 abgebildet. In dem Belichtungsstrahlengang befindet sich ein Strahlteiler 7, der einen kleinen Anteil des modulierten Lichts durch ein weiteres Objektiv 8 auf ein Fotodiodenarray 9 auskoppelt. Die am Fotodiodenarray 9 empfangene Information wird an eine Recheneinheit 10 übertragen, an der diese Daten mit den Bilddaten verglichen werden. Das Resultat des Vergleichs wird an die Steuereinrichtung 4 weitergegeben, die es bei der Ansteuerung des Lichtmodulators 3 berücksichtigt.

Anhand der digitalen Bilddaten wird auf dem Fotopapier ein farbiges Bild dadurch erzeugt, daß nacheinander jeder Farbauszug, also Rot, Grün und Blau, durch Einschwenken des entsprechenden Filters auf das Fotopapier übertragen wird. Für jeden dieser Farbauszüge liegen an der Steuereinrichtung die entsprechenden Bilddaten vor. Anhand dieser Bilddaten ist für jedes Pixel des Lichtmodulators 3 vorgegeben, wieviel Licht es in einer bestimmten Zeitspanne passieren lassen muß. Der Strahlteiler 7, die Optik 8 und das Fotodiodenarray 9 sind so justiert, daß jeweils eine definierte Anzahl Pixel des Lichtmodulators einer Fotodiode entspricht.

Von jeder Fotodiode wird die pro vorbestimmter Zeiteinheit gemessene Lichtmenge an die Recheneinheit 10 weitergeleitet. An dieser wird der Sollwert - also die Lichtmenge, die entsprechend der Bilddaten von der Anzahl korrespondierender Lichtmodulatorpixel auf die Fotodiode transmittiert werden soll - ermittelt. Der Sollwert wird mit dem gemessenen Wert verglichen und die Differenz mit dem Sollwert in Relation gesetzt. Dabei ergibt sich ein relativer Fehler, der mit dem relativen Fehler der nächstliegenden Fotodiode verglichen werden kann. Am Unterschied der relativen Fehler lassen sich Lichtschwankungen ablesen.

Diese werden bei der Ansteuerung des Lichtmodulators berücksichtigt, indem die mit der Fotodiode, die den im Mittel zu geringen Wert gemessen hat, korrespondierenden Pixel des LCD noch so lange Licht transmittieren, bis die Differenz ausgeglichen ist, während die anderen Pixel bereits abgeschaltet sind.

Mit dieser Anordnung lassen sich also Belichtungsschwankungen korrigieren, die beispielsweise durch den zu einer ungleichmäßigen Beleuchtung des LCDs führenden Randabfall der Beleuchtungseinrichtung oder durch Veränderungen der Transmissionsfähigkeit des Lichtmodulators bedingt sind.

Um die Belichtung einzelner Pixel des Lichtmodulators vermessen und korrigieren zu können, ist eine höhere Auflösung des Sensors notwendig. In diesem Fall müßte das ausgekoppelte Bild z. B. auf ein CCD projiziert werden, das mindestens die gleiche Auflösung haben muß wie der zu überwachende Ausschnitt des Lichtmodulators. Strahlteiler 7, Optik 8 und CCD müßten in diesem Fall so justiert sein, daß genau ein Pixel am CCD jeweils einem Pixel am LCD 3 entspricht. In diesem Fall kann jede Abweichung des Istwertes vom Sollwert direkt pro Pixel korrigiert werden.

Dieses Belichtungskorrekturverfahren läßt sich sowohl für ein LCD mit Beleuchtungseinrichtung als auch für jede andere digitale Bilderzeugungseinrichtung verwenden. Hier wären beispielsweise ein DMD, welches dann reflexiv beleuchtet werden muß, ein LED-Array oder auch eine CRT einsetzbar. Bei einem Kontaktbelichter, wie beispielsweise einem PLZT oder einem LED-Array mit Selfoclens-Array, ist die erfindungsgemäße Belichtungskorrektur ebenso möglich, die Auskopplung des Lichts ist aber komplizierter. Hier könnte eine Lichtauskoppeleinheit in die Selfoclens-Arrays integriert werden, welche zwischen PLZT oder LEDs und Fotopapier angeordnet sind.

Für die in Fig. 2 dargestellte digitale Bilderzeugungseinrichtung ist die erfindungsgemäße Belichtungskorrektur besonders vorteilhaft ist. Hier ist die digitale Bilderzeugungseinrichtung aus zwei DMDs 11 und 12 aufgebaut, deren Bilder durch einen Strahlteiler 13 zu einem Bild vereinigt werden. Die beiden DMDs werden von LEDs 14 bzw. 15 beleuchtet, deren Licht durch Strahlteiler 16 und 17 in je einem Strahlengang zusammengeführt wird. Das Licht dieser Beleuchtungseinrichtungen wird an den beiden DMDs moduliert, wobei die Modulation von einer Steuereinrichtung 18 anhand der digitalen Bilddaten gesteuert wird. Das durch den Strahlteiler 13 vereinigte Bild wird durch ein Objektiv 19 auf Fotopapier 20 abgebildet. Das - vom Fotopapier aus gesehen - an der Rückseite des Strahlteilers entstehende, identische Referenzbild wird durch ein weiteres Objektiv 21 auf ein CCD 22 abgebildet. Das CCD 22 ist so justiert, daß einem Pixel am CCD jeweils ein Pixel der digitalen Bilderzeugungseinrichtung entspricht.

Falls die Beleuchtung des Lichtmodulators der Bilderzeugungseinrichtung mit je einer Farbe nach der anderen erfolgt, kann jeder Farbauszug getrennt korrigiert werden. Sollte die Belichtung des Fotopapiers jedoch mit mehrfarbigem Licht erfolgen, z. B. durch das Übereinanderprojizieren der drei farbigen Bilder dreier unterschiedlich beleuchteter Lichtmodulatoren, so muß das Referenzbild vor oder bei dem CCD in die Farbanteile aufgespalten werden. Dies kann beispielsweise durch Strahlteiler, ein Filterrad oder Filter auf den CCD-Zeilen geschehen. Das am CCD aufgenommene Bild wird von einer Recheneinheit 23 ausgewertet. Die Recheneinheit 23 vergleicht dieses aufgenommene Bild mit dem Sollwert, der sich theoretisch bei optimaler Übertragung und Beleuchtung aus den Bilddaten ergeben würde.

Im Gegensatz zu einer Abbildungsvorrichtung, bei der nur ein Lichtmodulator verwendet wird, hat dieser Aufbau den Vorteil, daß ein Bild in zwei Teilbilder zerlegt werden kann, wobei diese beiden Teilbilder zwar mit jeweils einem Lichtmodulator relativ geringer Auflösung auf das Papier belichtet werden, aber dennoch ein Gesamtbild relativ hoher Auflösung auf dem Fotopapier entsteht. Problematisch ist dabei, daß die beiden Teilbilder insbesondere an der Stoßkante aufeinander abgestimmt werden müssen, so daß kein sprunghafter Übergang von einem Teilbild zum anderen entsteht.

Hierfür kann die Erfindung besonders vorteilhaft eingesetzt werden, da über die geregelte Ansteuerung einzelner Pixel der Lichtmodulatoren jeglicher meßbarer Unterschied in der Beleuchtung der Pixel unterschiedlicher Lichtmodulatoren ausgeglichen werden kann.

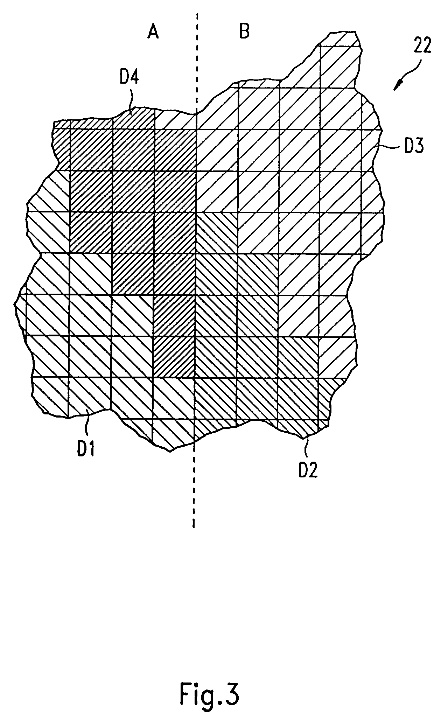

Wie in der Figur 2 dargestellt, kann für diese Regelung das am Strahlteiler 13 ohnehin entstehende, ausgekoppelte Referenzbild verwendet werden. Dieses Bild oder ein dem Stoßbereich der Teilbilder entsprechender Ausschnitt davon, wird am CCD 22 aufgenommen. Auf dem CCD 22 ergibt sich dann beispielsweise beim Abbilden eines schmalen Striches in einer Farbe das für den Stoßbereich in Fig. 3 schematisch dargestellte Dichtebild. Im Teilbereich A, auf den das Teilbild des ersten Lichtmodulators 11 abgebildet wird, werden die Dichten D1 und D4 gemessen. Im Teilbereich B des CCD 22 mißt man die vom zweiten Lichtmodulator 12 abgebildeten Dichten D2 und D3. Obwohl im Ausgangsbild die digitalen Daten eines durchgezogenen Strichs einheitlicher Dichte vorliegt, unterscheiden sich die Dichten D2 und D4 deutlich. Das bedeutet, daß trotz gleicher Ausgangsdaten bei der aktuellen Ansteuerung der Lichtmodulatoren, insbesondere aufgrund der Beleuchtung der Lichtmodulatoren mit unterschiedlichen Lichtquellen, die einzelnen Pixel vom zweiten Lichtmodulator wesentlich weniger Licht auf den Stoßbereich übertragen. Um nun ein optimales Abbild der digitalen Bilddaten - also ein einheitliches Dichtebild - zu erhalten, müssen die Lichtmodulatoren anders angesteuert werden. Die Differenz zwischen D2 und D4 muß über die aktuelle Belichtungszeit aufsummiert und vom zweiten Lichtmodulator nachbelichtet werden. Vorteilhaft ist bei dieser Anordnung, daß für die Belichtungskorrektur weder in den Belichtungsstrahlengang eingegriffen werden noch die Belichtung ausgesetzt werden muß, lediglich die Ansteuerung der Lichtmodulatoren wird verändert

Die Beleuchtungseinrichtungen für die Lichtmodulatoren müssen bei dem beschriebenen Aufbau - wie durch die nicht durchgezogenen Linien in Fig. 2 angedeutet - in unterschiedlichen räumlichen Ebenen (vor bzw. hinter der Zeichnungsebene) angeordnet sein, so daß ihr Licht am Strahlteiler vorbei auf die DMDs gelangt. Die DMDs müssen dann gegenüber der Zeichenebene geneigt sein.

Einfacher wäre es, bei der Realisierung einer aus mehreren Lichtmodulatoren aufgebauten Bilderzeugungseinrichtung anstelle des angedeuteten Strahlteilers 13 Strahlteilerprismen zu verwenden, die sowohl die beiden Bilder der DMDs zusammenfügen als auch das Licht der Beleuchtungseinrichtungen auf die DMDs reflektieren bzw. transmittieren. Je nach Komplexität der Prismen wird selbstverständlich auch damit ein Abbild des auf das Fotopapier aufzubelichtenden Bildes automatisch in einer anderen Abbildungsebene erzeugt, das dann wieder zur Belichtungskorrektur verwendet werden kann.

Um eine höhere Auflösung mit einem niedriger auflösenden Lichtmodulator zu erzeugen, können auch am Lichtmodulator nacheinander erzeugte Teilbilder auf das Fotopapier nebeneinander aufbelichtet werden. Hierdurch läßt sich ein zusätzlicher Lichtmodulator einsparen, der Belichtungsvorgang dauert dafür aber länger. Das nacheinander Aufbelichten der Teilbilder kann dadurch geschehen, daß entweder der Lichtmodulator von einem Platz zu einem daneben liegenden bewegt wird oder aber die Optik oder das Fotopapier werden zwischen den Belichtungen verschoben. Auch hier erweist sich die Erfindung als besonders vorteilhaft, da die Teilbilder anhand der am Sensor aufgenommenen Vergleichsbilder so korrigiert werden können, daß ein nahtloser Übergang von einem zum anderen Teilbild erfolgt und ein gleichmäßiges Gesamtbild auf dem Fotopapier entsteht.

## Patentansprüche

1. Vorrichtung zum Belichten eines digitalen Bildes auf lichtempfindliches Material mit einer Bilderzeugungseinrichtung, die von einer Steuereinrichtung entsprechend der Bilddaten angesteuert wird, einem optischen System zum Abbilden des Bildes auf das lichtempfindliche Material und einer Bühne zum Halten des lichtempfindlichen Materials, **dadurch gekennzeichnet,** daß ein Strahlteiler im Belichtungsstrahlengang angeordnet ist, der einen Teil des von der Bilderzeugungseinrichtung abgestrahlten Lichts auf einen Sensor leitet, der mindestens eine Zeile aufweist.

2. Vorrichtung nach Anspruch 1, dadurch gekennzeichnet, daß der Sensor mit der Steuereinrichtung einen Regelkreis bildet.

3. Vorrichtung nach Anspruch 1, dadurch gekennziechnet, daß der Sensor mindestens zwei Zeilen aufweist.

4. Vorrichtung nach Anspruch 3, dadurch gekennzeichnet, daß der Sensor ein CCD aufweist.

5. Vorrichtung nach Anspruch 3, dadurch gekennzeichnet, daß der Sensor ein Fotodiodenarray aufweist.

6. Vorrichtung nach Anspruch 1, dadurch gekennzeichnet, daß die Bilderzeugungseinrichtung einen reflektierenden Lichtmodulator und eine Beleuchtungseinrichtung aufweist.

7. Vorrichtung nach Anspruch 6, dadurch gekennzeichnet, daß die Bilderzeugungseinrichtung mehrere reflektierende Lichtmodulatoren aufweist.

8. Vorrichtung nach Anspruch 7, dadurch gekennzeichnet, daß die Bilder der reflektierenden Lichtmodulatoren auf dem lichtempfindlichen Material zu einem Gesamtbild vereinigt werden.

9. Vorrichtung nach Anspruch 1, dadurch gekennzeichnet, daß die Bilderzeugungseinrichtung einen transmissiven Lichtmodulator und eine Beleuchtungseinrichtung aufweist.

10. Vorrichtung nach Anspruch 9, dadurch gekennzeichnet, daß die Bilderzeugungseinrichtung mehrere Bildmodulatoren aufweist.

11. Vorrichtung nach Anspruch 1, dadurch gekennzeichnet, daß die Bilderzeugungseinrichtung LEDs aufweist.

12. Vorrichtung nach Anspruch 1, dadurch gekennzeichnet, daß die Bilderzeugungseinrichtung eine CRT aufweist.

13. Verfahren zum Belichten eines digitalen Bildes auf lichtempfindliches Material, wobei das Bild von einer entsprechend der Bilddaten angesteuerten Bilderzeugungseinrichtung erzeugt und von einem optischen System auf das lichtempfindliche Material abgebildet wird, dadurch gekennzeichnet, daß von dem von der Bilderzeugungseinrichtung abgestrahlten Licht mittels eines Strahlteilers ein Teil ausgekoppelt und auf einen mindestens eine Zeile aufweisenden Sensor geleitet wird.

14. Verfahren nach Anspruch 13, dadurch gekennzeichnet, daß das am Sensor empfangene Licht bei der Ansteuerung der Bilderzeugungseinrichtung berücksichtigt wird.

15. Verfahren nach Anspruch 13, dadurch gekennzeichnet, daß das Bild durch Aneinandersetzen von Teilbildern erzeugt wird, die durch Aufteilen der digitalen Bilddaten gewonnen wurden.

16. Verfahren nach Anspruch 15, dadurch gekennzeichnet, daß die Teilbilder gleichzeitig nebeneinander auf das lichtempfindliche Material aufbelichtet werden.

17. Verfahren nach Anspruch 15, dadurch gekennzeichnet, daß die Teilbilder nacheinander aufbelichtet werden.

18. Verfahren nach Anspruch 17, dadurch gekennzeichnet, daß zwischen dem Aufbelichten der Teilbilder das lichtempfindliche Material bewegt wird.

19. Verfahren nach Anspruch 17, dadurch gekennzeichnet, daß zwischen dem Aufbelichten der Teilbilder die Bilderzeugungseinrichtung bewegt wird.

20. Verfahren nach Anspruch 17, dadurch gekennzeichnet, daß zwischen dem Aufbelichten der Teilbilder der Abbildungsstrahlengang verändert wird.
